# EUROPÄISCHE PATENTSCHRIFT

(11) **EP 3 642 082 B1**
(45) Veröffentlichungstag und Bekanntmachung des Hinweises auf die Patenterteilung: **31.03.2021**
(21) Anmeldenummer: 18746086.0
(22) Anmeldetag: 15.06.2018
(51) Int. Cl.: B60R 19/48, B60R 11/00

(54) **HALTERUNG ZUR BEFESTIGUNG EINES SENSORS, INSBESONDERE RADARSENSORS, AN EINEM FAHRZEUG UND EIN SYSTEM AUS EINER HALTERUNG UND DEM SENSOR**
HOLDER FOR FIXING A SENSOR, IN PARTICULAR RADAR SENSOR, TO A VEHICLE, AND SYSTEM COMPRISING A HOLDER AND THE SENSOR
ÉLÉMENT DE RETENUE POUR LA FIXATION D'UN CAPTEUR, EN PARTICULIER D'UN CAPTEUR RADAR, À UN VÉHICULE ET SYSTÈME CONSTITUÉ D'UN ÉLÉMENT DE RETENUE ET DU CAPTEUR

(30) Priorität: 20.06.2017 RO 201700401; 20.06.2017 DE 102017210291
(43) Veröffentlichungstag der Anmeldung: 29.04.2020
(73) Patentinhaber: Conti Temic microelectronic GmbH, 90411 Nürnberg (DE); Continental Automotive GmbH, 30165 Hannover (DE)
(72) Erfinder: GLIGOR, Liviu, 300585 Timisoara (RO); LAPUGEAN, Alexandru, 300715 Timisoara (RO); SNOWDON, Lars, 88131 Lindau (DE)
(74) Vertreter: Continental Corporation
(86) Internationale Anmeldenummer: PCT/DE2018/200062
(87) Internationale Veröffentlichungsnummer: WO 2018/233779

(56) Entgegenhaltungen:
- DE-A1-102008 050 320
- DE-A1-102010 010 571
- DE-A1-102010 047 273
- DE-A1-102012 101 781
- DE-A1-102016 203 406

## Beschreibung

Die Erfindung betrifft eine Halterung zur Befestigung eines Sensors, insbesondere Radarsensors, an einem Fahrzeug und ein System aus einer Halterung und dem Sensor zur Befestigung an einem Fahrzeug.

### TECHNISCHER HINTERGRUND

Aus der DE 10 2010 047 273 A1 ist eine Halterung zur Befestigung eines Sensors eines Abstandsregeltempomaten als Erfassungseinheit an einer Rohbaustruktur eines Fahrzeugs bekannt. Die Halterung weist dabei eine als Aussparung ausgeführte Aufnahme zur Anordnung der Erfassungseinheit und Befestigungselemente zur Befestigung an der Rohbaustruktur auf. Dabei ist zumindest ein zweites Befestigungselement derart ausgebildet, dass sich dieses bei einem Anprall eines Fußgängers an die Erfassungseinrichtung verformt. Das zweite Befestigungselement ist Z-förmig gefaltet ausgebildet.

Die DE 10 2012 101 781 A1, die den Oberbegriff des Anspruchs 1 offenbart, beschreibt einen Halterahmen zur Anordnung im Innenraum eines Fahrzeugs an einer Fahrzeugscheibe und zur Anordnung wenigstens einer Sensorvorrichtung in dem Halterahmen, wobei Führungsbahnen, die an einer Seite des Halterahmens ausgebildet sind und zur Aufnahme von Halteelementen ausgestaltet sind, derart ausgestaltet sind, dass die Sensorvorrichtung an die Fahrzeugscheibe herangeführt wird.

Die DE 10 2016 203 406 A1 betrifft eine Fahrzeugbordkamerabefestigungsstruktur mit einer an einem Fenster angeordnete Halterung und einer in der Halterung angeordnete Feder, die auf die Fahrzeugbordkamera eine gegen das Fenster gerichtete kraft ausübt.

Heutzutage werden Radarsensoren vor dem Fahrzeug hinter einer zweiten Oberfläche mittels einer Halterung befestigt. Die zweite Oberfläche kann dabei Teil der Stoßstange, Teil des Kühlergrills oder Teil des Fahrzeugemblems sein. Die Halterung muss dabei eine korrekte Ausrichtung des Radarsensors sicherstellen. Um diese Anforderungen zu erfüllen muss der Radarsensor in einer Halterung befestigt werden, welche elastische Elemente wie Schnapper und Tellerfedern aus Kunststoff oder Metall aufweist. Die Halterung muss des Weiteren eine Schnittstelle zum Befestigen an dem Fahrzeug aufweisen. Der Radarsensor ist selbst ein einfacher Sensor ohne spezielle Befestigungsschnittstellen.

Der Radarsensor muss in einer Halterung befestigt werden, da jede Abweichung von seiner korrekten Position oder korrekten Ausrichtung zu Fehlern und Unannehmlichkeiten führt. Ein herkömmliches Konzept zur Befestigung des Radarsensors erfordert dabei den Einsatz zusätzlichen Schrauben zur Befestigung des Radarsensors in der zugeordneten Halterung. Das resultiert jedoch in einer komplizierten Radarsensorabdeckung und erfordert einen komplexen Herstellungsprozess.

### ZUSAMMENFASSUNG DER ERFINDUNG

Vor diesem Hintergrund ist es eine Aufgabe der vorliegenden Erfindung, eine verbesserte Halterung zum Befestigen eines Radarsensors an einem Fahrzeug bereitzustellen.

Erfindungsgemäß wird diese Aufgabe durch eine Halterung mit den Merkmalen des Patentanspruchs 1 und einem System aus der Halterung und einem Sensor mit den Merkmalen des Patentanspruchs 12 und ein Fahrzeug mit einem derartigen System mit den Merkmalen des Patentanspruchs 15 gelöst.

Demgemäß wird eine Halterung für einen Sensor bereitgestellt zur Befestigung an einem Fahrzeug, insbesondere Kraftfahrzeug, aufweisend:
einen Rahmen mit eine Öffnung zur Aufnahme und Befestigung des Sensors, wobei wenigstens zwei gegenüberliegende Wände der Öffnung jeweils wenigstens einen Klemmabschnitt zum Festklemmen des Sensors in der Öffnung aufweisen und wobei wenigstens zwei weitere gegenüberliegende Wände der Öffnung jeweils wenigstens einen Aufnahmeabschnitt zur Aufnahme eines Abschnitts des Sensors aufweisen, wobei wenigstens einer der Aufnahmeabschnitte einen Federabschnitt aufweist zum Vorspannen des Sensors in Richtung der gegenüberliegenden Wand.

Die der Erfindung zugrunde liegende Idee besteht darin, dass der Sensor in der Halterung sicher befestigt und in seiner Position gehalten werden kann, ohne dass zusätzliche Elemente, wie beispielsweise Schrauben zur Befestigung des Sensors in der Halterung notwendig sind. Des Weiteren kann der Sensor in der Öffnung der Halterung von zwei Seiten montiert werden, ohne dass dazu umfangreiche Änderungen am Design der Halterung notwendig sind.

Des Weiteren wird ein System aus der Halterung und einem Fahrzeugsensor mit einem Sensorgehäuse vorgesehen, wobei das Sensorgehäuse vorzugsweise an zwei gegenüberliegenden Seiten jeweils wenigstens einen länglichen Vorsprung aufweist zum Festklemmen durch einen jeweils zugeordneten Klemmabschnitt der Halterung.

Außerdem ist ein Fahrzeug mit einem derartigen System aus der Halterung und einem Fahrzeugsensor vorgesehen.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform sind die beiden gegenüberliegenden Wände, welche jeweils den wenigstens einen Klemmabschnitt aufweisen, flexibel ausgebildet, wobei die jeweilige Wand zumindest in einem Wandabschnitt, welcher den jeweiligen wenigstens einen Klemmabschnitt aufweist, vorzugsweise flexible an dem Rahmen aufgehängt ist, wobei der Wandabschnitt besonders bevorzugt als Steg ausgebildet ist, welcher an seinen zwei Enden, an dem Rahmen derart aufgehängt ist, um sich in Richtung und entgegen der Richtung der gegenüberliegenden Wand beweglich zu sein. Dies hat den Vorteil, dass der Sensor zwischen den beiden Wänden eingeklemmt werden kann, ohne dass zum Klemmen filigrane und exakt gefertigte Schnapper oder dergleichen erforderlich sind. Des Weiteren erlauben die Klemmabschnitt, dass ein Sensor von zwei Seiten in der Öffnung des Rahmens befestigt werden kann, ohne dass dazu die flexiblen Wände als solches geändert werden müssen, sondern allenfalls der Klemmabschnitt an das Sensorgehäuse des Sensors angepasst werden muss.

In einer anderen erfindungsgemäßen Ausführungsform sind die beiden gegenüberliegenden Wände, welche jeweils den wenigstens einen Klemmabschnitt aufweisen, derart ausgebildet den Sensor in der Einbauposition in der Halterung vorzuspannen.

Dies hat den Vorteil, dass der Sensor in seiner Einbauposition in der Halterung fest gehalten wird, so dass er sich nicht ungewollt in Richtung einer der Wände im Betrieb bewegen und zu ungewollten Geräuschen führen kann.

In einer weiteren erfindungsgemäßen Ausführungsform ist der jeweilige Aufnahmeabschnitt als Vertiefung, vorzugsweise mit einem Bodenabschnitt, ausgebildet zur Aufnahme eines Befestigungs- und Halteelements, insbesondere eines stiftartigen Vorsprungs, als Abschnitt des Sensors. Durch den Bodenabschnitt kann der Sensor zusätzlich in seiner Einbauposition nach unten gehalten werden. Bei einer Montage des Sensors von der anderen Seite der Öffnung des Rahmens ist gegebenenfalls lediglich eine Änderung des Bodenabschnitts an der Halterung erforderlich um den Sensor von der anderen Seite in der Halterung zu montieren.

Erfindungsgemäß weist der Klemmabschnitt eine Rastnase auf zum Aufrasten oder Aufclipsen auf den Sensor, insbesondere auf der Oberseite des Sensorgehäuses. Auf diese Weise kann der Sensor mit seinem Sensorgehäuse zwischen der Rastnase und dem Bodenabschnitt der Vertiefung der Halterung gehalten werden und die Rastnase den Sensor gegen den Bodenabschnitt der jeweiligen Vertiefung der Halterung optional zusätzlich vorspannen.

In einer erfindungsgemäßen Ausführungsform spannt die Rastnase den Sensor mit seinem Sensorgehäuse in der Einbauposition in der Halterung vorzugsweise gegen den Bodenabschnitt der jeweiligen Vertiefung vor. Auf diese Weise kann zusätzlich entgegengewirkt werden, dass der Sensor sich in der Halterung in seiner Einbauposition auf- und ab und damit in und aus der Öffnung des Rahmens bewegt und unter Umständen ungewollte Geräusche erzeugt.

In einer weiteren erfindungsgemäßen Ausführungsform weist der jeweilige Klemmabschnitt einen Führungs- und/oder Zentrierungsabschnitt auf zum Führen und/oder Zentrieren des Sensors, insbesondere wenn der Sensor in die Öffnung des Rahmens eingeführt wird bis er seine Einbauposition erreicht. Dadurch wird die Montage des Sensors in der Halterung vereinfacht und ermöglicht eine intuitive Montage durch den Monteur.

In einer erfindungsgemäßen Ausführungsform ist der jeweilige Klemmabschnitt mit einer keilförmigen Kontur ausgebildet zum Einklemmen und Einkeilen des Sensors in der Einbauposition, wobei der Klemmabschnitt mit seiner keilförmigen Kontur beispielsweise derart ausgebildet ist, dass der Sensor in der Einbauposition in der Halterung sich nicht auf- und ab und damit nicht in und aus der Öffnung und des Weiteren nicht in Richtung und entgegen der Richtung der Wand mit dem Klemmabschnitt bewegen kann. Eine derartige Keilförmige Kontur ist sehr einfach und kostengünstig in der Herstellung.

Gemäß einer erfindungsgemäßen Ausführungsform weist wenigstens eine Wand der Öffnung der Halterung eine Aufnahme, beispielsweise eine Vertiefung oder einen Schlitz, auf zur Aufnahme eines Kodierelements des Sensors. Dies hat den Vorteil, dass der Sensor nicht ungewollt falsch in der Halterung montiert werden kann und das Kodierelement des Weiteren zur Kodierung genutzt werden kann.

In einer erfindungsgemäßen Ausführungsform ist die Halterung zumindest teilweise oder vollständig aus Kunststoff.

In einer weiteren erfindungsgemäßen Ausführungsform weist die Halterung eine Fahrzeugschnittstelle auf zum Befestigen der Halterung zusammen mit dem eingebauten Sensor an dem Fahrzeug, beispielsweise durch Verschrauben, Verkleben und/oder Verschweißen.

In einer erfindungsgemäßen Ausführungsform weist die Öffnung des Rahmens eine rechte Wand, eine linke Wand, eine Vorderwand und eine Rückwand auf, wobei die beiden gegenüberliegenden Wände mit dem jeweils wenigstens einen Klemmabschnitt die rechte und linke Wand und die wenigstens zwei weiteren gegenüberliegende Wände der Öffnung, welche jeweils den wenigstens einen Aufnahmeabschnitt zur Aufnahme eines Abschnitts des Sensors aufweisen die Vorder- und Rückwand sind, oder wobei die beiden gegenüberliegenden Wände mit dem jeweils wenigstens einen Klemmabschnitt die Vorder- und Rückwand sind und die wenigstens zwei weiteren gegenüberliegende Wände der Öffnung, welche den jeweils wenigstens einen Aufnahmeabschnitt zur Aufnahme eines Abschnitts des Sensors aufweisen die rechte und linke Wand sind. Die viereckige Öffnung mit ihren vier Wänden kann beispielsweise als eine quadratische Öffnung oder rechteckige Öffnung ausgebildet sein.

Gemäß einer erfindungsgemäßen Ausführungsform weist das Sensorgehäuse des in der Halterung zu befestigenden Sensors an zwei anderen gegenüberliegenden Seiten wenigstens ein Befestigungs- und Halteelement auf, wobei das Befestigungs- und Halteelement beispielsweise ein stiftartiger Vorsprung ist, zur Aufnahme in dem zugeordneten Aufnahmeabschnitt der Halterung. Auf diese Weise wird nur jeweils ein Abschnitt, wie ein Befestigungs- und Halteelement in einem zugeordneten Aufnahmeabschnitt der Halterung aufgenommen und durch einen wenigstens einer der Aufnahmeabschnitte ausgeformten Federabschnitte gegen die gegenüberliegende Wand und deren Aufnahmeabschnitt vorgespannt und der Sensor dadurch sicher in der Halterung gehalten.

In einer weiteren erfindungsgemäßen Ausführungsform weist das Sensorgehäuse wenigstens ein Kodierelement auf zur Aufnahme in der korrespondierenden Aufnahme der Halterung. Dadurch kann eine Fehlmontage verhindert und des Weiteren eine Kodierung bereitgestellt werden.

In einer anderen erfindungsgemäßen Ausführungsform ist der Fahrzeugsensor beispielsweise ein Radarsensor oder ein anderer Sensor, welcher keine eigene oder zusätzliche Schnittstelle zum Befestigen an einem Fahrzeug aufweist, sondern über die erfindungsgemäße Halterung an dem Fahrzeug befestigt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Perspektivansicht eines Sensors, welcher in einer Halterung gemäß der Erfindung befestigbar und anschließend an einem Fahrzeug mittels der Halterung montierbar ist;
- Fig. 2: einer Perspektivansicht der Halterung zum Befestigen des Sensors gemäß Fig. 1;
- Fig. 3: eine Schnittansicht A-A der Halterung und des Sensors gemäß der Fig. 1 und 2, wobei der Sensor in die Öffnung der Halterung eingeführt wird;
- Fig. 4: eine weitere Schnittansicht A-A der Halterung und des Sensors gemäß der Fig. 1 und 2, wobei der Halter in die Öffnung der Halterung weiter eingeführt ist;
- Fig. 5: eine Schnittansicht A-A der Halterung und des Sensors gemäß der Fig. 1 und 2, in der zusammengebauten Position; und
- Fig. 6: eine weitere Schnittansicht B-B der Halterung und des Sensors gemäß der Fig. 1 und 2, in der zusammengebauten Position.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

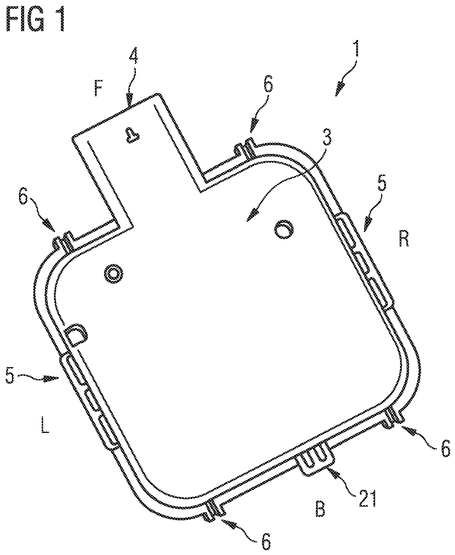

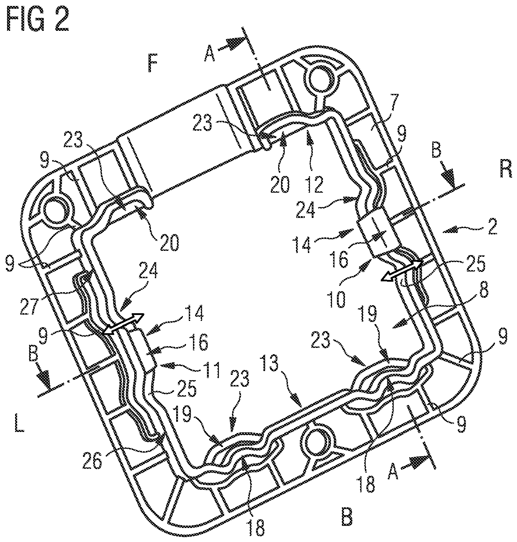

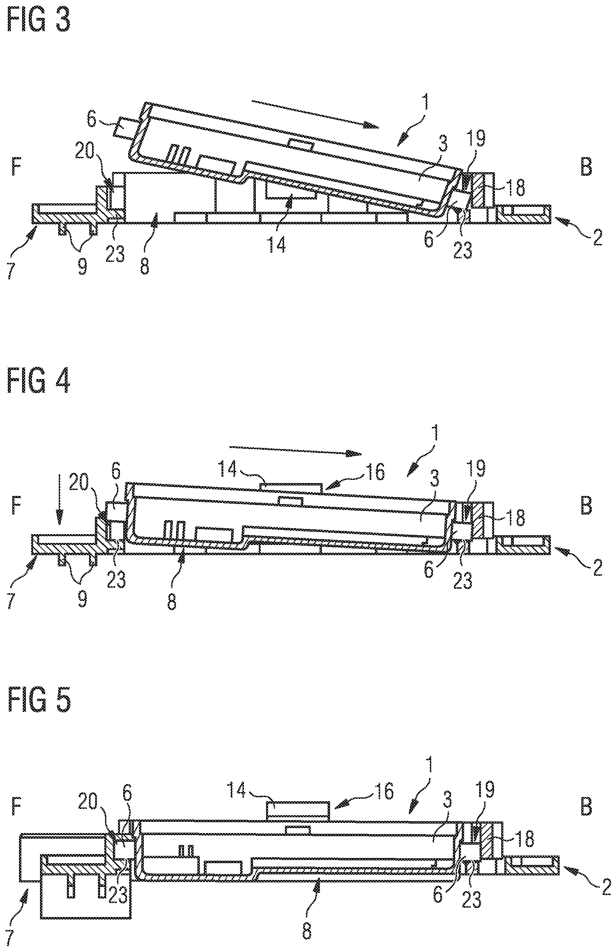

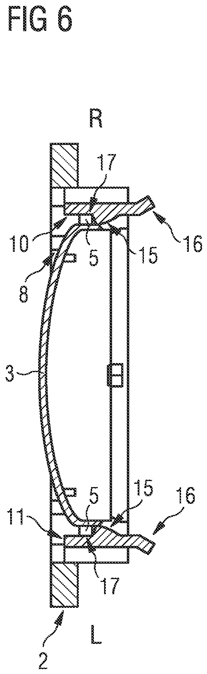

In Fig. 1 ist eine Perspektivansicht eines Radarsensors gezeigt, als Beispiel für einen Sensor 1, welcher in einer Halterung 2 gemäß der Erfindung befestigbar und anschließend an einem Fahrzeug mittels der Halterung 2 montierbar ist. In Fig. 2 ist wiederum die Halterung 2 zum Befestigen des Sensors 1 gemäß Fig. 1 in einer Perspektivansicht gezeigt. Des Weiteren sind in den Fig. 3, 4 und 5 die verschiedenen Stufen der Montage des Sensors 1 gemäß Fig. 1 in der Halterung 2 gemäß Fig. 2 in einer Schnittansicht A-A dargestellt. In Fig. 6 ist die Halterung 2 mit dem darin fertig montierten Sensor 1 in einer weiteren Schnittansicht B-B gezeigt, wobei die Halterung 2 und der Sensor 1 dabei ein System bilden, welches an einem zugeordneten Fahrzeug befestigt werden kann.

Derzeit werden Radarsensoren, wie beispielsweise Nahbereichsradar- Sensoren, auch als SRR- (Short Range Radar) Sensoren abgekürzt, auf zwei Arten befestigt.

Zum einen werden solche Radarsensoren an einer Kunststoffhalterung befestigt, an welcher zwei Metallhülsen durch Umspritzen befestigt sind. Die Kunststoffhalterung mit den Metallhülsen wird zusammen mit dem an der Kunststoffhalterung befestigen Radarsensor an einem Stoßfänger montiert.

Zum anderen werden Radarsensoren auch an einer kleineren Halterung befestigt, an welcher ebenfalls Metallhülsen durch Umspritzen angebracht sind. Die kleinere Halterung mit ihren Metallhülsen wird zusammen mit dem daran angebrachten Radarsensor anschließend an einem blechförmigen Metallteil aufgeclipst. Die Schnittstelle für die Halterung mit dem daran befestigten Radarsensor ist steif. Die Halterung mit dem daran befestigten Radarsensor wird anschließend mittels unterschiedlicher Verfahren an dem Fahrzeug befestigt, entweder durch Schweißen, Kleben oder durch Verwenden von verschiedenen Clips.

Die Halterung mit dem daran befestigten Radarsensor muss eine genaue Ausrichtung des Radarsensors an dem Fahrzeug sicherstellen und des Weiteren ein leichtes Montieren an und Demontieren des Radarsensors von der Halterung erlauben. Des Weiteren muss die Halterung eine ungewollte Bewegung des Radarsensors an der Schnittstelle verhindern, welche sonst während des Betriebs in hörbaren Geräuschen resultieren kann.

Das Verwenden von Metallhülsen als zusätzlichen Komponenten führt jedoch zu einer Erhöhung der Kosten und der Komplexität der Spritzgussform und der Halterung. Die Entwicklung gestaltet sich des Weiteren schwieriger und erfordert mehr Zeit. Die Herstellung erfordert außerdem einen zusätzlichen Schritt des Festziehens von zwei in den Metallhülsen einzuschraubenden Schrauben zum Befestigen des Radarsensors an der Halterung.

Die Schnittstelle zwischen dem Radarsensor und der Halterung ist bei den beiden zuvor beschriebenen Befestigungslösungen unterschiedlich, was in einer unterschiedlichen Ausgestaltung der jeweiligen Schnittstelle resultiert. Zwei unterschiedliche Schnittstellen für den Radarsensor und die jeweils zugeordnete Halterung zum Befestigen des Radarsensors erhöht jedoch die Entwicklungskosten.

Die Erfindung stellt daher ein neues, einfaches und Fehler vermeidendes Sensorbefestigungs- und Sensorentfernungskonzept bereit.

Das Konzept verwendet dabei dieselbe Schnittstelle zum Befestigen des Sensors 1 in zwei Richtungen unter Verwendung einer zumindest teilweise flexiblen Halterung 2 mit symmetrischen Befestigungsabschnitten.

Eine Kombination aus Führungselementen und das Verwenden des Körpers der Halterung 2 als flexible Befestigungseinrichtung mit flexiblen Befestigungsabschnitten ohne zusätzliche Extrakomponenten und ohne das Erfordernis von empfindlichen und präzise zu formenden Schnappern reduziert die Kosten und die Befestigungszeit.

Wie in Fig. 1 gezeigt ist, weist das gezeigten Ausführungsbeispiel für den Sensor 1 ein Sensorgehäuse 3 mit einem Sensoranschluss 4 auf. Die Erfindung ist jedoch auf diese spezielle Ausgestaltung des Sensors und auf den Sensoranschluss nicht beschränkt.

Das Sensorgehäuse 3 des Sensors 1 weist auf zwei gegenüberliegenden Seiten, hier z.B. der rechten Seite *R* und der linken Seite *L*, zwei Vorsprünge 5 auf. Der jeweilige Vorsprung erstreckt sich in dem Ausführungsbeispiel in Fig. 1 entlang eines Abschnitts an der rechten bzw. linken Seite *R, L* des Sensorgehäuses 3 und bildet so einen länglichen Vorsprung 5 oder Seitenflügel an dem Sensorgehäuse 3 aus.

An ebenfalls zwei gegenüberliegenden Seiten, hier z.B. der Vorderseite *F* und der Rückseite *B* des Sensorgehäuses 3, sind jeweils beispielsweise zwei vordere und hintere Befestigungs- und Halteelemente 6 an dem Sensorgehäuse 3 in Form von z.B. stiftförmigen Vorsprüngen ausgebildet.

Die beispielsweise in Fig. 2-6 gezeigte erfindungsgemäße Halterung 2 weist einen umlaufenden Rahmen 7 auf, welcher eine Öffnung 8 bildet, in welcher der Sensor 1 gemäß Fig. 1 einsetzbar und befestigbar ist. Der Rahmen 7 kann dabei, wie z.B. in Fig. 2 gezeigt ist, mit zusätzlichen Verstärkungsrippen 9 versehen sein zum zumindest partiellen Erhöhen der Stabilität des Rahmens 7.

Die Öffnung 8 des Rahmens 7 ist durch eine rechte Wand 10, eine linke Wand 11, eine Vorderwand 12 und eine Rückwand 13 begrenzt, wie in Fig. 2 gezeigt ist.

An den den beiden länglichen Vorsprüngen 5 des Sensorgehäuses 3 gegenüberliegenden Wänden der Öffnung 8 der Halterung 1, beispielweise der rechten und linken Wand 10, 11 der Öffnung 8 in Fig. 2, sind zwei Klemmabschnitte 14 als Befestigungsabschnitte ausgebildet, welche den Sensor 1 mit seinem Sensorgehäuse 3 mit seinen länglichen Vorsprüngen 5 dazwischen ein- oder festklemmen. Die Klemmabschnitte 14 können dabei flexibel ausgebildet sein oder mit anderen Worten die jeweilige Wand der Öffnung 8 mit dem Klemmabschnitt 14 kann zumindest im Bereich des Klemmabschnitts 14 flexibel oder nachgiebig ausgebildet sein zum Einklemmen des Sensorgehäuses 3. In dem in Fig. 2 gezeigten Ausführungsbeispiel sind die rechte und linke Wand 10, 11 zumindest in einem Wandabschnitt 24, welcher den jeweiligen Klemmabschnitt 14 aufweist, flexible an dem Rahmen 7 aufgehängt. Der jeweilige Wandabschnitt 24 ist als Steg 25 ausgebildet, welcher seinen zwei Enden, d.h. seinem ersten und zweiten Enden 26, 27, an dem Rahmen 7 aufgehängt ist, um sich, wie mit dem Doppelpfeil angedeutet, in Richtung und entgegen der Richtung der gegenüberliegenden Wand bewegen zu können und den Sensor 1 in eingebautem Zustand festzuklemmen und zwischen den beiden Wandabschnitten 24 einzuklemmen.

Des Weiteren können die Klemmabschnitte 14 beispielsweise wahlweise zusätzlich keilförmig ausgebildet sein zum Einkeilen und Einklemmen des Sensorgehäuses 3 zwischen den Klemmabschnitten 14.

In dem in den Fig. 2 und 6 gezeigten Ausführungsbeispiel ist der jeweilige Klemmabschnitt 14 erfindungsgemäß mit einer zusätzlichen nach innen in die Öffnung 8 vorstehenden Rastnase 15 ausgebildet, welche an dem Sensorgehäuse 3 aufrastet oder aufgeclipst wird, wenn der Sensor 1 mit seinem Sensorgehäuse 3 fertig in der Öffnung 8 des Rahmens 7 eingebaut und somit in seiner Einbau- oder Endposition ist. Der Sensor 1 in seiner Einbau- oder Endposition in der Halterung 2 ist in Fig. 5 und 6 gezeigt.

Des Weiteren kann, wie in dem in den Fig. 2-6 gezeigten Ausführungsbeispiel gezeigt, der jeweilige Klemmabschnitt 14 wahlweise zusätzliche mit einem Führungs- und/oder Zentrierungsabschnitt 16 versehen sein. Der Führungs- und/oder Zentrierungsabschnitt 16 des Klemmabschnitts 14 ist derart ausgebildet, dass er den Sensor 1 mit seinem Sensorgehäuse 3 beim Einführen in den Rahmen 7 und dessen Öffnung 8 bis zum Festklemmen durch die Klemmabschnitte 14 und Aufrasten von vorhandenen Rastnasen 15 führt und vorzugsweise zusätzlich zentriert. Dabei sind die Führungs- und/oder Zentrierungsabschnitte 16 der Klemmabschnitte 14 flexibel und/oder federnd ausgebildet. Durch die Führungs- und/oder Zentrierungsabschnitte 16 der Klemmabschnitte 14 kann die Montage des Sensors 1 zusätzlich vereinfacht und eine korrekte Positionierung des Sensors 1 in der Halterung 2 unterstützt werden.

Beim Einsetzten des Sensors 1 in die Öffnung 8 des Rahmens 7 drücken die beiden länglichen Vorsprünge 5 die Führungs- und/oder Zentrierungsabschnitte 16 der Klemmabschnitte 14 nach außen oder auseinander. Die länglichen Vorsprünge 5 werden dann zwischen die beiden Klemmabschnitten 14 gedrückt und durch diese seitlich eingeklemmt und dadurch in der Öffnung 8 des Rahmens 7 festgeklemmt und gehalten. Die beiden Klemmabschnitte 14 weisen dabei, wie z.B. in dem Ausführungsbeispiel in Fig. 6 gezeigt ist, eine beispielsweise zuvor genannte Keilform oder keilförmige Kontur 17 entlang zumindest eines Teils des Klemmabschnitts 14 auf, zum Ein- und Festklemmen des Sensors 1 und seines Sensorgehäuses 3 in der Öffnung des Rahmens 7.

Die zusätzlichen Führungs- und/oder Zentrierungsabschnitte 16 der Halterung 2 dienen nicht nur zum Führen und/oder Zentrieren des Sensors 1 in der Halterung 2 bis dieser in der korrekten Rast- oder Clipsposition ist, sondern sie dienen auch als ein schnelles und einfaches Sensormontage- und Demontageelement.

An der Rückwand 13 der Öffnung 8 der Halterung 2 sind beispielsweise zwei Federabschnitte 18 vorgesehen, welche derart ausgebildet sind, dass sie den Sensor 1 in eingebautem Zustand gegen die gegenüberliegende Wand der Öffnung 8, hier die Vorderwand 12 in Fig. 2 drücken. Genauer weist die Rückwand 13 zwei Vertiefungen 19 auf, in welchen jeweils einer der Federabschnitte 18 ausgebildet ist. Der jeweilige Federabschnitt 18 kann dabei beispielsweise wie zuvor der Klemmabschnitt 14 derart ausgebildet sein, dass zumindest ein Wandabschnitt der Rückwand 13, welcher den Federabschnitt 18 aufweist und die Vertiefung 19 bildet, flexible an dem Rahmen 7 aufgehängt ist. Der jeweilige Wandabschnitt der Rückwand 13 ist dabei beispielsweise als Steg ausgebildet, welcher an seinen zwei Enden, d.h. seinem ersten und zweiten Enden, an dem Rahmen 7 aufgehängt ist und des Weiteren die Vertiefung 19 bildet. Der Steg kann sich in Richtung und entgegen der Richtung der gegenüberliegenden Wand, hier der Vorderwand 12 bewegen, um den Sensor 1 in eingebautem Zustand in Richtung der Vorderwand 12 zu drücken oder vorzuspannen.

Die Vorderwand 12 weist ebenfalls zwei Vertiefungen 20 auf. In den Vertiefungen 20, 19 der Vorderwand 12 und der Rückwand 13 werden dabei die zuvor genannten Befestigungs- und Halteelemente 6 des Sensorgehäuses 3 in Form von z.B. stiftförmigen Vorsprüngen aufgenommen. Der Federabschnitt 18 in der jeweiligen Vertiefung 19 der Rückwand 13 der Halterung 2 drückt dann das Sensorgehäuse 3 mit seinen Befestigungs- und Halteabschnitten 6 in Richtung und gegen die Vorderwand 12, beispielsweise feste oder weniger flexible Vorderwand 12. Auf diese Weise wird der Sensor durch die Halterung in eingebauten Zustand vorgespannt, wie zuvor beschrieben, und an einem ungewollten Bewegen in Richtung der Vorderwand und entgegen der Vorderwand gehindert. Des Weiteren weisen die vorderen und/oder hinteren Vertiefungen 20, 19 jeweils wahlweise zusätzlich einen Bodenabschnitt 23 auf. Das Sensorgehäuse 3 mit seinen in den Vertiefungen 19, 20 aufgenommenen Befestigungs- und Halteelementen 6 kann durch die Klemmabschnitte 14 und insbesondere gegebenenfalls zusätzlich vorhandene Rastnasen gegen die Bodenabschnitte 23 in den Vertiefungen vorgespannt werden, um so eine Vorspannkraft bereitzustellen, welche eine ungewollte auf- und ab Bewegung des Sensors 1 in eingebautem Zustand in der Öffnung 8 der Halterung 2 verhindert.

Um den Sensor 1 mit seinem Sensorgehäuse 3 an der Halterung 2 zu befestigen, wird das Sensorgehäuse 3, wie in Fig. 3 gezeigt ist, zuerst mit einer Wand der Öffnung 8 der Halterung 2 in Kontakt gebracht, z.B. der Rückwand 13 in dem Ausführungsbeispiel in Fig. 3. Genauer wird das Sensorgehäuse 3 derart in Kontakt mit der Rückwand 13 der Öffnung 8 der Halterung 2 gebracht, bis die beiden Befestigungs- und Halteelemente 6 des Sensorgehäuses 3 in Form von z.B. stiftförmigen Vorsprüngen in den Vertiefungen 19 in der Rückwand 13 aufgenommen sind und die Federabschnitte 18 in den Vertiefungen 19 kontaktieren. Der Sensor 1 wird beim Einführen in die Öffnung 8 der Halterung 2 des Weiteren durch die gegebenenfalls vorhandenen Führungs- oder Zentrierungsabschnitte 16 der Klemmabschnitte 14 geführt und/oder zentriert.

In dem in Fig. 1 gezeigten Ausführungsbeispiel weist das Sensorgehäuse 3 an seiner Rückseite *B* wahlweise zusätzlich ein Kodierungselement, beispielsweise einen Kodierungsvorsprung 21 in Fig. 1 auf, welches derart ausgebildet ist, dass das Sensorgehäuse 3 nicht falsch in der Halterung 2 eingebaut werden kann. Der Kodierungsvorsprung 21 in dem Ausführungsbeispiel in Fig. 1 wird in eine Aufnahme 22, z.B. einen Schlitz oder Vertiefung, an der Rückwand 13 der Öffnung 8 der Halterung 2 aufgenommen. Dadurch kann das Sensorgehäuse 3 nicht falsch in der Halterung 2 eingebaut werden, da ein Monteur sofort bemerkt, wenn er das Sensorgehäuse 3 falsch eingeführt hat, da der Kodierungsvorsprung 21 dann nicht in der zugeordneten Aufnahme 22, z.B. dem Schlitz oder der Vertiefung, aufnehmbar ist und dadurch das Sensorgehäuse 3 am weiteren Einsetzen in die Öffnung 8 der Halterung 2 gehindert wird.

Hat der Monteur dagegen den Sensor 1 mit der Rückwand 13 des Sensorgehäuses 3 korrekt in die Öffnung 8 der Halterung 2 eingeführt und dabei den gegebenenfalls vorhandenen zusätzlichen Kodierungsvorsprung 21 in die Aufnahme 22 in der zugeordneten Wand der Halterung 2 eingeführt, dann drückt der Monteur auch die Vorderseite *F* des Sensors 1 in die Öffnung 8 der Halterung 2, wie in Fig. 4 gezeigt ist. Dabei wird der Sensor 1 mit seinen beiden hinteren Befestigungs- und Halteelementen 6 in Form von z.B. stiftförmigen Vorsprüngen in den Vertiefungen 19 in der Rückwand 13 aufgenommen, wobei diese die Federabschnitte 16 in diesen Vertiefungen 19 kontaktieren. Dadurch wird der Sensor 1 gegen die Vorderwand 13 und die vorderen Befestigungs- und Halteelementen 6 des Sensorgehäuse 2 in die zugeordneten Vertiefungen 20 in der Vorderwand 12 gedrückt.

Die gegebenenfalls vorhandenen Führungs- oder Zentrierungsabschnitte 16 der Klemmabschnitte 14 helfen bei der Ausrichtung des Sensors 1 und seines Sensorgehäuses 3 in der Halterung 2, während sie gleichzeitig dem Sensor 1 erlauben leicht und gleichmäßig zu gleiten bis er in die gewünschte Position oder seine Endposition in der Öffnung 8 der Halterung 2 einschnappt oder einrastet.

In der Schnittansicht A-A in Fig. 5 und in der Schnittansicht B-B in Fig. 6 ist der Sensor 1 mit seinem Sensorgehäuse 3 in seiner Endposition oder Einbauposition in der Halterung 2 gezeigt.

In diesem Zustand drücken die Federabschnitte 18 in den Vertiefungen 19 an der Rückwand 13 der Halterung 2 den Sensor 1 mit seinem Sensorgehäuse 3 sowie die vorderen zwei Befestigungs- und Halteelemente 6 in Form von z.B. stiftförmigen Vorsprüngen nach vorne und gegen die Vorderwand 13 der Halterung 2. Diese so bereitgestellte Vorspannkraft verhindert ein ungewolltes Vor- und Zurückbewegen des Sensors 1 in der Halterung 2 bzw. das zuvor beschrieben Bewegen des Sensors in Richtung der Vorderwand 13 und entgegen der Richtung der Vorderwand 13 der Öffnung 8.

Wie in der Schnittansicht B-B in Fig. 6 gezeigt ist, wirken wiederum die beiden länglichen Vorsprünge 5 oder Seitenflügel an der rechten und linken Seite *R, L* des Sensorgehäuses 3 mit den Klemmabschnitten 14 an der rechten und linken Wand 10, 11 der Öffnung 8 der Halterung 2 zusammen. Dadurch wird der Sensor 1 mit seinem Sensorgehäuse 3 in der Halterung 2 durch die Klemmabschnitte 14 eingeklemmt und eingekeilt, so dass der Sensor 1 sowohl nach unten als auch von den Seiten, d.h. seiner rechten und linken Seite *R, L,* durch die Klemmabschnitte 14 gehalten wird. Diese durch die Klemmabschnitte 14 erzeugte Vorspannkraft auf den Sensor in Richtung der rechten und linken Wand 10, 11 der Öffnung 8 der Halterung 2 blockiert eine ungewollte seitliche Bewegung, d.h. eine ungewollte Bewegung des Sensors nach rechts und links, sowie eine ungewollte auf- und ab- Bewegung des Sensors 1 in der Halterung 2.

Insbesondere bewirkt die Rastnase 15 des Klemmabschnitts 14 sowie gegebenenfalls die Keilform des jeweiligen Klemmabschnitts 14, dass das Sensorgehäuse 3 mit seinem jeweiligen Befestigungs- und Halteabschnitten 6 gegen einen Bodenabschnitt 23 der jeweils zugeordneten Vertiefung 19 bzw. 20 gedrückt und wahlweise zusätzlich vorgespannt wird. Auf diese Weise kann das Sensorgehäuse 3 an der zuvor genannten ungewollten auf- und ab- Bewegung gehindert werden.
Auf diesem Weg hält die Halterung 2 den Sensor 1 in allen Richtungen fest und lässt keinen Freiraum für ungewollte Bewegungen des Sensors in der Halterung 2. Außerdem verhindern Vorspannkräfte in allen Raumrichtungen, dass ungewollte hörbare Geräusche während des Betriebs des Sensors 1 entstehen können. Des Weiteren können Elemente wie die Federabschnitte 16 und Klemmabschnitte 14 usw. Toleranzunterschiede aufgrund z.B. von unterschiedlichen Materialien kompensieren.

Die Halterung mit dem daran befestigten Radarsensor weist vorzugsweise eine Fahrzeugschnittstelle auf, um die Halterung an dem Fahrzeug zu befestigen beispielsweise durch Schweißen, Kleben, Schrauben usw.

Der Hauptvorteil der Erfindung liegt darin, dass der Sensor 1 durch die Halterung 2 in eingebautem Zustand in mehreren und vorzugsweise allen Richtungen vorgespannt werden kann. Dies erlaubt einen festen Sitz des Sensors 1 in der Halterung 2 ohne, dass empfindliche, elastische und sehr exakt zu fertigende Elemente der Halterung als Schnapper vorgesehen werden müssen.

Des Weiteren sind keine anderen Elemente erforderlich, wie z.B. Metallfedern, oder Schrauben, die vormontiert oder hergestellt werden müssen. Weiter sind keine zusätzlichen Metallelemente, wie Hülsen, notwendig, die angespritzt werden müssen, was zu einer Reduzierung von Kosten, Herstellungs- und Entwicklungszeit führt.

Ein weiterer Vorteil der Erfindung liegt darin, dass die Montage und Demontage des Sensors 1 in der Halterung 2 sehr einfach und sehr intuitiv für einen Monteur ist.

Der Sensor 1 kann des Weiteren in zwei Richtungen nach unten und oben zeigend montiert werden, ohne dass auch nur eine geringfügige Änderung in der Gestalt der Halterung 2 für verschiedene Situationen oder Ausgangslagen notwendig ist.

Die Schnittstelle zwischen Halterung 2 und dem daran befestigen Sensor 1 und einem Fahrzeug ist bezüglich der Dimensionierung flexibel, so dass bei der Ausführung des Sensors 1 und dessen Sensorgehäuse 3 die Dimensionierung und das Gewicht des Sensors 1 und seines Sensorgehäuses 3 flexibel gewählt werden kann.

Diese Schnittstelle zwischen Halterung 2 und Fahrzeug kann für verschiedene Befestigungsbereiche genutzt werden. Zum Beispiel kann die Schnittstelle verwendet werden, um den Sensor 1 in der Halterung 2 zu befestigen, wobei die Halterung 2 selbst beispielsweise mit Schrauben, durch Kleben und/oder durch Schweißen an dem Fahrzeug, z.B. einer Fahrzeugstoßstange oder einem anderen vergleichbaren Fahrzeugbauteil, befestigt werden kann.

Die vorliegende Erfindung wurde am Beispiel eines Radarsensors erläutert, welcher keine eigene oder zusätzliche Befestigungsschnittstelle zum Befestigen an einem Fahrzeug aufweist. Stattdessen wird der Radarsensor in einer Halterung befestigt, mit welcher er anschließend an dem Fahrzeug befestigt wird. Die Erfindung ist jedoch nicht auf einen Radarsensor beschränkt sondern kann auf jeden Fahrzeugsensor angewendet werden, welcher keine eigene oder zusätzliche Schnittstelle zum Befestigen an einem Fahrzeug aufweist, sondern über die erfindungsgemäße Halterung an dem Fahrzeug befestigt wird.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die verschiedenen Ausführungsformen sind dabei miteinander kombinierbar, insbesondere einzelne Merkmale davon.

### BEZUGSZEICHEN

- 1: Sensor
- 2: Halterung
- 3: Sensorgehäuse
- 4: Sensoranschluss
- 5: länglicher Vorsprung
- 6: Befestigungs- und Halteelement
- 7: Rahmen
- 8: Öffnung
- 9: Verstärkungsrippe
- 10: rechte Wand
- 11: linke Wand
- 12: Vorderwand
- 13: Rückwand
- 14: Klemmabschnitt
- 15: Rastnase
- 16: Führungs- und/oder Zentrierungsabschnitt
- 17: keilförmige Kontur
- 18: Federabschnitt
- 19: Vertiefung (mit Federabschnitt)
- 20: Vertiefung
- 21: Kodierungsvorsprung
- 22: Aufnahme
- 23: Bodenabschnitt (Vertiefung)
- 24: Wandabschnitt
- 25: Steg
- 26: erstes Ende des Stegs
- 27: zweites Ende des Stegs

## Patentansprüche

1. Halterung (2) für einen Sensor (1) zur Befestigung an einem Fahrzeug, insbesondere Kraftfahrzeug, aufweisend: einen Rahmen (7) mit eine Öffnung (8) zur Aufnahme und Befestigung des Sensors (1), wobei wenigstens zwei gegenüberliegende Wände (10, 11) der Öffnung (8) jeweils wenigstens einen Klemmabschnitt (14) zum Festklemmen des Sensors (1) in der Öffnung (8) aufweisen und wobei wenigstens zwei weitere gegenüberliegende Wände (12, 13) der Öffnung (8) jeweils wenigstens einen Aufnahmeabschnitt (19, 20) zur Aufnahme eines Abschnitts (6) des Sensors (1) aufweisen, wobei wenigstens einer der Aufnahmeabschnitte (19) einen Federabschnitt (18) aufweist zum Vorspannen des Sensors (1) in Richtung der gegenüberliegenden Wand (12), **dadurch gekennzeichnet, dass** der jeweilige Klemmabschnitt (14) eine Rastnase (15) aufweist zum Aufrasten oder Aufclipsen auf den Sensor (1) .

2. Halterung nach Anspruch 1, **dadurch gekennzeichnet, dass** die beiden gegenüberliegenden Wände (10, 11), welche jeweils den wenigstens einen Klemmabschnitt (14) aufweisen flexibel ausgebildet sind, wobei die jeweilige Wand (10, 11) zumindest in einem Wandabschnitt (24), welcher den jeweiligen wenigstens einen Klemmabschnitt (14) aufweist, vorzugsweise flexible an dem Rahmen (7) aufgehängt ist, wobei der Wandabschnitt (24) besonders bevorzugt als Steg (25) ausgebildet ist, welcher an seinen zwei Enden (26, 27), an dem Rahmen (7) derart aufgehängt ist, um sich in Richtung und entgegen der Richtung der gegenüberliegenden Wand beweglich zu sein.

3. Halterung nach Anspruch 1 oder 2, **dadurch gekennzeichnet, dass** die beiden gegenüberliegenden Wände (10, 11), welche jeweils den wenigstens einen Klemmabschnitt (14) aufweisen den Sensor (1) in der Einbauposition in der Halterung (2) vorspannen.

4. Halterung nach einem der vorstehenden Ansprüche, **dadurch gekennzeichnet, dass** der jeweilige Aufnahmeabschnitt als Vertiefung (19, 20), vorzugsweise mit einem Bodenabschnitt (23), ausgebildet ist zur Aufnahme eines Befestigungs- und Halteelements (6), insbesondere eines stiftartigen Vorsprungs, als Abschnitt des Sensors (1).

5. Halterung nach einem der vorangehenden Ansprüche, **dadurch gekennzeichnet, dass** die Rastnase (15) den Sensor (1) in der Einbauposition vorzugsweise gegen den Bodenabschnitt (23) der Vertiefung (19, 20) vorspannt.

6. Halterung nach einem der vorstehenden Ansprüche, **dadurch gekennzeichnet, dass** der jeweilige Klemmabschnitt (14) einen Führungs- und/oder Zentrierungsabschnitt (16) aufweist zum Führen und/oder Zentrieren des Sensors (1).

7. Halterung nach einem der vorstehenden Ansprüche, **dadurch gekennzeichnet, dass** der jeweilige Klemmabschnitt (14) mit einer keilförmigen Kontur (17) ausgebildet ist zum Einklemmen und Einkeilen des Sensors (1) in der Einbauposition, wobei der Klemmabschnitt (14) mit seiner keilförmigen Kontur (17) vorzugsweise derart ausgebildet ist, dass der Sensor (1) in der Einbauposition in der Halterung (2) sich nicht auf- und ab und des Weiteren nicht in Richtung und entgegen der Richtung der Wand (10, 11) mit dem Klemmabschnitt (14) bewegen kann.

8. Halterung nach einem der vorstehenden Ansprüche, **dadurch gekennzeichnet, dass** wenigstens eine Wand (13) der Öffnung (8) der Halterung (2) eine Aufnahme (22), insbesondere eine Vertiefung oder einen Schlitz, aufweist zur Aufnahme eines Kodierelements (21) des Sensors (1).

9. Halterung nach einem der vorstehenden Ansprüche, **dadurch gekennzeichnet, dass** die Halterung (2) aus Kunststoff ist.

10. Halterung nach einem der vorstehenden Ansprüche, **dadurch gekennzeichnet, dass** die Halterung (2) eine Fahrzeugschnittstelle aufweist zum Befestigen der Halterung an dem Fahrzeug, insbesondere durch Verschrauben, Verkleben und/oder Verschweißen.

11. Halterung nach einem der vorstehenden Ansprüche, **dadurch gekennzeichnet, dass** die Öffnung (8) des Rahmens (7) eine rechte Wand (10), eine linke Wand (11), eine Vorderwand (12) und eine Rückwand (13) aufweist, wobei die beiden gegenüberliegenden Wände mit dem jeweils wenigstens einen Klemmabschnitt (14) die rechte und linke Wand (10, 11) und die wenigstens zwei weiteren gegenüberliegende Wände der Öffnung (8), welche jeweils den wenigstens einen Aufnahmeabschnitt (19, 20) zur Aufnahme eines Abschnitts (6) des Sensors (1) aufweisen die Vorder- und Rückwand (12, 13) sind, oder
wobei die beiden gegenüberliegenden Wände mit dem jeweils wenigstens einen Klemmabschnitt (14) die Vorder- und Rückwand (12, 13) sind und die wenigstens zwei weiteren gegenüberliegende Wände der Öffnung (8), welche den jeweils wenigstens einen Aufnahmeabschnitt (19, 20) zur Aufnahme eines Abschnitts (6) des Sensors (1) aufweisen die rechte und linke Wand (10, 11) sind.

12. System aus der Halterung (2) gemäß einem der vorangehenden Ansprüche und einem Fahrzeugsensor (1) mit einem Sensorgehäuse (3), wobei das Sensorgehäuse (3) vorzugsweise an zwei gegenüberliegenden Seiten jeweils wenigstens einen länglichen Vorsprung (5) aufweist zum Festklemmen durch einen jeweils zugeordneten Klemmabschnitt (14) der Halterung (2).

13. System nach Anspruch 12, **dadurch gekennzeichnet, dass** das Sensorgehäuse (3) an zwei anderen gegenüberliegenden Seiten wenigstens ein Befestigungs- und Halteelement (6) aufweist, wobei das Befestigungs- und Halteelement (6) insbesondere ein stiftartiger Vorsprung ist, zur Aufnahme in dem zugeordneten Aufnahmeabschnitt (19, 20) der Halterung (2).

14. System nach Anspruch 12 oder 13, **dadurch gekennzeichnet, dass** das Sensorgehäuse (3) wenigstens ein Kodierelement (21) aufweist zur Aufnahme in dem korrespondierenden Aufnahme (22) der Halterung (2).

15. System nach Anspruch 12, 13 oder 14, **dadurch gekennzeichnet, dass** der Fahrzeugsensor (1) ein Radarsensor ist.

16. Fahrzeug mit einem System nach einem der Ansprüche 12, 13, 14 oder 15.

## Claims

1. Holder (2) for a sensor (1) for attachment to a vehicle, in particular motor vehicle, having:
a frame (7) with an opening (8) for receiving and attaching the sensor (1), wherein at least two walls (10, 11), lying opposite one another, of the opening (8) each have at least one clamping section (14) for clamping the sensor (1) tight in the opening (8), and wherein at least two further walls (12, 13), lying opposite one another, of the opening (8) each have at least one receptacle section (19, 20) for receiving a section (6) of the sensor (1), wherein at least one of the receptacle sections (19) has a spring section (18) for prestressing the sensor (1) in the direction of the opposite wall (12), **characterized in that** the respective clamping section (14) has a latching projection (15) for latching or clipping onto the sensor (1).

2. Holding according to Claim 1, **characterized in that** the two walls (10, 11) which lie opposite one another and which each have at least one clamping section (14) are of flexible design, wherein the respective wall (10, 11) is suspended, at least in one wall section (24) which has the respective at least one clamping section (14), preferably flexibly from the frame (7), wherein the wall section (24) is particularly preferably embodied as a web (25) which is suspended at its two ends (26, 27) from the frame (7) in such a way that it is movable in the direction of and counter to the direction of the opposite wall.

3. Holder according to Claim 1 or 2, **characterized in that** the two walls (10, 11) which are opposite one another and which each have the at least one clamping section (14) prestress the sensor (1) in the installation position in the holder (2) .

4. Holder according to one of the preceding claims, **characterized in that** the respective receptacle section is embodied as a depression (19, 20), preferably with a floor section (23), in order to receive an attachment and holding element (6), in particular a pin-like projection, as a section of the sensor (1).

5. Holder according to one of the preceding claims, **characterized in that** the latching projection (15) prestresses the sensor (1) in the installation position, preferably against the floor section (23) of the depression (19, 20).

6. Holder according to one of the preceding claims, **characterized in that** the respective clamping section (14) has a guiding and/or centering section (16) for guiding and/or centering the sensor (1).

7. Holder according to one of the preceding claims, **characterized in that** the respective clamping section (14) is formed with a wedge-shaped contour (17) for clamping and wedging the sensor (1) in the installation position, wherein the clamping section (14) is preferably embodied with its wedge-shaped contour (17) in such a way that in the installation position the sensor (1) can not move up and down in the holder (2), and furthermore cannot move in the direction of or counter to the direction of the wall (10, 11) with the clamping section (14).

8. Holder according to one of the preceding claims, **characterized in that** at least one wall (13) of the opening (8) of the holder (2) has a receptacle (22), in particular a depression or a slot, for receiving a coding element (21) of the sensor (1).

9. Holder according to one of the preceding claims, **characterized in that** the holder (2) is made of plastic.

10. Holder according to one of the preceding claims, **characterized in that** the holder (2) has a vehicle interface for attaching the holder to the vehicle, in particular by screwing, clamping and/or welding.

11. Holder according to one of the preceding claims, **characterized in that** the opening (8) in the frame (7) has a right-hand wall (10), a left-hand wall (11), a front wall (12) and a rear wall (13), wherein the two walls which lie opposite one another with the respective at least one clamping section (14) are the right-hand and left-hand walls (10, 11), and the at least two further walls, which lie opposite one another, of the opening (8), which each have the at least one receptacle section (19, 20) for receiving a section (6) of the sensor (1), are the front and rear walls (12, 13), or
wherein the two walls, which lie opposite one another, with the respective at least one clamping section (14) are the front and rear walls (12, 13), and the at least two further walls, which lie opposite one another, of the opening (8), which have the respective at least one receptacle section (19, 20) for receiving a section (6) of the sensor (1), are the right-hand and the left-hand walls (10, 11).

12. System composed of the holder (2) according to one of the preceding claims, and a vehicle sensor (1) with a sensor housing (3), wherein the sensor housing (3) has at least one elongate projection (5), preferably on each of two sides which lie opposite one another, for clamping tight the holder (2) by means of a respectively assigned clamping section (14).

13. System according to Claim 12, **characterized in that** the sensor housing (3) has at least one attachment and holding element (6) on two other sides which lie opposite one another, wherein the attachment and holding element (6) is, in particular, a pin-like projection, to be received in the assigned receptacle section (19, 20) of the holder (2).

14. System according to Claim 12 or 13, **characterized in that** the sensor housing (3) has at least one coding element (21) to be received in the corresponding receptacle (22) of the holder (2).

15. System according to Claim 12, 13 or 14, **characterized in that** the vehicle sensor (1) is a radar sensor.

16. Vehicle having a system according to one of Claims 12, 13, 14 or 15.

## Revendications

1. Dispositif de retenue (2) pour un capteur (1) destiné à la fixation sur un véhicule, en particulier un véhicule automobile, présentant : un cadre (7) pourvu d'une ouverture (8) pour loger et fixer le capteur (1), dans lequel au moins deux parois opposées (10, 11) de l'ouverture (8) présentent chacune au moins une partie de serrage (14) pour bloquer le capteur (1) dans l'ouverture (8), et au moins deux autres parois opposées (12, 13) de l'ouverture (8) présentent chacune au moins une partie de logement (19, 20) pour loger une partie (6) du capteur (1), au moins l'une des parties de réception (19) présentant une partie faisant ressort (18) pour précontraindre le capteur (1) en direction de la paroi opposée (12), **caractérisé en ce que** la partie de serrage (14) respective présente un ergot d'encliquetage (15) pour un encliquetage ou enclenchement sur le capteur (1).

2. Dispositif de retenue selon la revendication 1, **caractérisé en ce que** les deux parois opposées (10, 11), qui présentent chacune ladite au moins une partie de serrage (14), sont réalisées de manière flexible, dans lequel la paroi respective (10, 11), au moins dans une partie de paroi (24) qui présente ladite au moins une partie de serrage (14), est suspendue au cadre (7) de préférence de manière flexible, la partie de paroi (24) étant de manière particulièrement préférée réalisée sous la forme d'une nervure (25) qui est suspendue au cadre (7) au niveau de ses deux extrémités (26, 27) de façon à être mobile en direction et à l'opposé de la direction de la paroi opposée.

3. Dispositif de retenue selon la revendication 1 ou 2, **caractérisé en ce que** les deux parois opposées (10, 11), qui présentent chacune ladite au moins une partie de serrage (14), précontraignent le capteur (1) dans la position de montage dans le dispositif de retenue (2).

4. Dispositif de retenue selon l'une quelconque des revendications précédentes, **caractérisé en ce que** la partie de logement respective est réalisée sous forme de creux (19, 20), de préférence avec une partie de fond (23), pour loger un élément de fixation et de retenue (6), en particulier une saillie en forme de cheville, en tant que partie du capteur (1) .

5. Dispositif de retenue selon l'une quelconque des revendications précédentes, **caractérisé en ce que** l'ergot d'encliquetage (15) précontraint le capteur (1) dans la position de montage, de préférence contre la partie de fond (23) du creux (19, 20).

6. Dispositif de retenue selon l'une quelconque des revendications précédentes, **caractérisé en ce que** la partie de serrage (14) respective présente une partie de guidage et/ou de centrage (16) pour guider et/ou centrer le capteur (1).

7. Dispositif de retenue selon l'une quelconque des revendications précédentes, **caractérisé en ce que** la partie de serrage (14) respective est réalisée avec un contour en forme de clavette (17) pour serrer et caler le capteur (1) dans la position de montage, la partie de serrage (14) avec son contour en forme de clavette (17) étant réalisé de préférence de telle sorte que le capteur (1) dans la position de montage dans le dispositif de retenue (2) ne peut pas monter et descendre et en outre ne peut pas se déplacer en direction et à l'opposé de la direction de la paroi (10, 11) avec la partie de serrage (14).

8. Dispositif de retenue selon l'une quelconque des revendications précédentes, **caractérisé en ce qu'**au moins une paroi (13) de l'ouverture (8) du dispositif de retenue (2) présente un logement (22), en particulier un creux ou une encoche, pour loger un élément de codage (21) du capteur (1).

9. Dispositif de retenue selon l'une quelconque des revendications précédentes, **caractérisé en ce que** le dispositif de retenue (2) est composé de matière plastique.

10. Dispositif de retenue selon l'une quelconque des revendications précédentes, **caractérisé en ce que** le dispositif de retenue (2) présente une interface de véhicule pour fixer le dispositif de retenue au véhicule, en particulier par vissage, collage et/ou soudage.

11. Dispositif de retenue selon l'une quelconque des revendications précédentes, **caractérisé en ce que** l'ouverture (8) du cadre (7) présente une paroi droite (10), une paroi gauche (11), une paroi avant (12) et une paroi arrière (13), dans lequel les deux parois opposées pourvues de ladite au moins une partie de serrage (14) respectivement sont la paroi droite et la paroi gauche (10, 11), et les au moins deux autres parois opposées de l'ouverture (8), qui présentent chacune ladite au moins une partie de logement (19, 20) pour loger une partie (6) du capteur (1), sont la paroi avant et la paroi arrière (12, 13), ou
dans lequel les deux parois opposées pourvues de ladite au moins une partie de serrage (14) respectivement sont la paroi avant et la paroi arrière (12, 13), et les au moins deux autres parois opposées de l'ouverture (8), qui présentent ladite au moins une partie de logement (19, 20) respectivement pour loger une partie (6) du capteur (1), sont la paroi droite et la paroi gauche (10, 11).

12. Système composé du dispositif de retenue (2) selon l'une quelconque des revendications précédentes et d'un capteur de véhicule (1) pourvu d'un boîtier de capteur (3), dans lequel le boîtier de capteur (3) présente de préférence sur deux faces opposées respectivement au moins une saillie allongée (5) pour le blocage par une partie de serrage (14) respectivement associée du dispositif de retenue (2).

13. Système selon la revendication 12, **caractérisé en ce que** le boîtier de capteur (3) présente sur deux autres faces opposées au moins un élément de fixation et de retenue (6), l'élément de fixation et de retenue (6) étant en particulier une saillie en forme cheville à loger dans la partie de logement associée (19, 20) du dispositif de retenue (2).

14. Système selon la revendication 12 ou 13, **caractérisé en ce que** le boîtier de capteur (3) présente au moins un élément de codage (21) à loger dans le logement correspondant (22) du dispositif de retenue (2).

15. Système selon la revendication 12, 13 ou 14, **caractérisé en ce que** le capteur de véhicule (1) est un capteur radar.

16. Véhicule comprenant un système selon l'une quelconque des revendications 12, 13, 14 ou 15.
